# EUROPÄISCHE PATENTSCHRIFT

(11) **EP 2 884 155 B1**
(45) Veröffentlichungstag und Bekanntmachung des Hinweises auf die Patenterteilung: **06.07.2016**
(21) Anmeldenummer: 14003805.0
(22) Anmeldetag: 12.11.2014
(51) Int. Cl.: F21S 8/02, F21V 13/12, F21V 3/00, F21V 5/04, F21V 7/00, F21V 7/06, F21Y 115/10

(54) **Leuchte mit Lichtleiter**
Lighting fixture having an optical wave guide
Éclairage avec guide de lumière

(30) Priorität: 16.12.2013 DE 102013021357
(43) Veröffentlichungstag der Anmeldung: 17.06.2015
(73) Patentinhaber: Glashütte Limburg Leuchten GmbH + Co. KG, 65549 Limburg (DE)
(72) Erfinder: Gantenbrink, Heinrich J., 58708 Menden (DE)
(74) Vertreter: Grünecker Patent- und Rechtsanwälte PartG mbB

(56) Entgegenhaltungen:
- EP-A1- 0 499 044
- EP-A1- 0 940 331
- WO-A1-2010/136248
- DE-A1- 10 116 040
- US-A1- 2006 245 178

## Beschreibung

Die vorliegende Erfindung betrifft eine Leuchte, insbesondere ein Down-Light, nach dem Oberbegriff des unabhängigen Anspruchs 1. Eine gattungsgemäße Leuchte umfasst eine Lichtquelle und einen Reflektor, wobei der Reflektor ein Lichteintrittsende und ein Lichtaustrittsende aufweist, wobei das Lichteintrittsende zumindest eine Lichteintrittsöffnung mit einem Rand umfasst und das Lichtaustrittsende eine Lichtaustrittsöffnung umfasst. Dabei umfasst die Leuchte des Weiteren einen Leuchtenschirm, der den Reflektor zumindest teilweise umgibt, wobei ein erster Teil des Lichts der Lichtquelle vom Reflektor durch die Lichtaustrittsöffnung abgegeben wird, und ein zweiter Teil des Lichts der Lichtquelle durch den Leuchtenschirm abgegeben wird.

Es wird also ein erster Teil des Lichtes als Lichtbündel zur Beleuchtung eines Bereichs vor dem Reflektor verwendet. Ein zweiter Teil des Lichts wird durch den Leuchtenschirm zur Umgebungsbeleuchtung verwendet. Beispielsweise kann die Decke diffus beleuchtet werden. Der zweite Teil des Lichts kann jedoch auch in einer beliebigen anderen Richtung abgegeben werden, beispielsweise um einen Bereich diffus zu beleuchten, der den durch den Reflektor beleuchteten Bereich umgibt.

Aus dem Stand der Technik ist eine Vielzahl von Leuchten bekannt, bei denen herkömmliche Glühlampen oder Energiesparlampen als Lichtquelle zum Einsatz kommen. Um eine weitere Energieeinsparung zu erzielen, werden in herkömmlichen Leuchten zum Teil auch LEDs mit speziellen Optikaufsätzen eingesetzt. Die Optikaufsätze sind erforderlich, um eine ähnliche Abstrahlcharakteristik zu erreichen wie mit herkömmlichen Leuchtmitteln. Es gibt jedoch nicht für alle Anwendungsbereiche ein kompatibles LED-Ersatzleuchtmittel. Diese sind außerdem teuer in der Herstellung und Entwicklung. Es ist daher wünschenswert Leuchten speziell für die Verwendung von LEDs zu entwickeln.

Eine Leuchte der eingangs genannten Art ist beispielsweise aus der DE 38 12 764 A1 bekannt. Der Reflektor dieser Leuchte hat mehrere Schlitze, durch die ein Teil des Lichts einer Halogenlampe zu einer Scheibe aus Kunststoffglas gelangt, welche das Licht nach außen leitet und in radialer Richtung zur dekorativen Beleuchtung abgibt.

Nachteilig bei der aus der DE 38 12 764 A1 bekannten Leuchte ist, dass durch die Schlitze im Reflektor das vom Reflektor abgegebene Licht nicht mehr gleichmäßig ist. Außerdem wird das durch die Schlitze gelangende Licht nicht effektiv in die Kunststoffglasscheibe eingekoppelt. Außerdem ist sie nicht für die Verwendung einer einfachen LED geeignet, da hier ein zu Form und Fassung der Halogenlampe kompatibles LED-Ersatzleuchtmittel nötig ist.

Eine Leuchte der eingangs genannten Art ist beispielsweise auch aus der DE 101 16 040 A1 bekannt. Bei dieser Leuchte wird eine Doppelwendel-Halogenlampe verwendet, wobei die Lampe so angeordnet ist, dass eine Wendel innerhalb des Reflektors angeordnet ist. Die zweite Wendel ist außerhalb des Reflektors vor der Lichteintrittsöffnung angeordnet und beleuchtet somit den Leuchtenschirm.

Nachteilig bei der aus der DE 101 16 040 A1 bekannten Leuchte ist, dass die Verwendung einer Doppelwendel-Halogenlampe bzw. zweier Lichtquellen einer kompakten Bauweise der Leuchte entgegensteht. Zusätzlich ist sie nicht für die Verwendung einer LED geeignet.

Es ist die Aufgabe der vorliegenden Erfindung, eine Leuchte bereitzustellen, die über einen kompakten und einfachen Aufbau verfügt und für den Einsatz von LEDs vorgesehen ist.

Die Aufgabe wird gelöst durch die Merkmale des Anspruchs 1. Demnach liegt bei einer Leuchte der eingangs genannten Art dann eine erfindungsgemäße Lösung der Aufgabe vor, wenn die Lichtquelle eine LED ist, wobei die Leuchte des Weiteren einen Lichtleiter umfasst, der im Bereich der Lichteintrittsöffnung zwischen der LED und dem Lichtaustrittsende derart angeordnet ist, dass zumindest ein Teil des Lichts der LED in den Lichtleiter eindringt, wobei der Lichtleiter einen Lichtleitbereich umfasst, der sich in einer Richtung senkrecht zur Längserstreckung des Reflektors zumindest teilweise über den Rand der Lichteintrittsöffnung hinaus erstreckt.

Die Erfindung bietet den Vorteil, dass sich die Leuchte durch die Verwendung einer LED sehr einfach und kompakt ausbilden lässt. Die Verwendung eines Lichtleiters ermöglicht, trotz einer kompakten Bauweise, das von der LED ausgesendete Licht zwischen dem Reflektor und dem Leuchtenschirm zu verteilen.

In anderen Worten ist der Lichtleiter in einer Projektion auf die Lichteintrittsöffnung des Reflektors in zumindest einer Richtung breiter als die Lichteintrittsöffnung. Sind Reflektor und Lichtleiter rotationssymmetrisch ausgebildet und koaxial angeordnet, erstreckt sich der Lichtleiter also in radialer Richtung über den Rand der Lichteintrittsöffnung hinaus. Der vom Reflektor abgegebene Lichtanteil wird von der LED durch den Lichtleiter hindurch in den Reflektor geleitet. Durch den Lichtleitbereich wird ein Teil des Lichts der LED, beispielsweise durch Totalreflexion, von der Lichteintrittsöffnung weg gelenkt und zur Abgabe durch den Leuchtenschirm geleitet.

Vorzugsweise wird das durch den Leuchtenschirm abgegebene Licht im Wesentlichen in einer Richtung senkrecht zu der Lichtabstrahlrichtung abgegeben, die durch die Lichtaustrittsöffnung des Reflektors definiert ist. Es ist jedoch auch möglich, dass das durch den Leuchtenschirm abgegebene Licht in eine beliebige andere Richtung abgegeben wird.

Die Lichtquelle der erfindungsgemäßen Leuchte besteht aus einer LED oder mehreren LEDs, wobei identische oder unterschiedliche LEDs zum Einsatz kommen können. Die LED kann dabei auch über eine Primäroptik verfügen. Vorzugsweise kommen sogenannte SMD-LEDs zum Einsatz, welche direkt auf eine Platine gelötet werden.

Im Rahmen der vorliegenden Erfindung kann die LED auch einteilig mit dem Lichtleiter ausgebildet sein. Ebenso ist es denkbar, dass der Lichtleiter einteilig mit dem Leuchtenschirm ausgebildet ist, bzw. kann der Lichtleiter zumindest einen Teil des Leichtenschirms bilden. Der Lichtleiter kann jedoch auch mehrteilig ausgebildet sein, bzw. kann der Leuchtenschirm zumindest einen Teil des Lichtleiters bilden.

Im Rahmen der vorliegenden Erfindung wird unter einem Leuchtenschirm sowohl ein vollständig transparenter Leuchtenschirm als auch ein semitransparenter oder opak ausgebildeter Leuchtenschirm verstanden.

Im Rahmen der vorliegenden Erfindung kann in der Lichtaustrittsöffnung des Reflektors ein Abschlussglas angeordnet sein. Dieses kann zumindest teilweise transparent, semitransparent oder opak ausgebildet sein. Es ist auch vorstellbar, dass das Abschlussglas mit dem Leuchtenschirm verbunden ist, bzw. Leuchtenschirm und Abschlussglas einteilig ausgebildet sind.

Eine erfindungsgemäße Leuchte kann insbesondere als Deckenstrahler oder Down-Light ausgebildet sein. Es ist jedoch auch möglich, eine erfindungsgemäße Leuchte für ein anderes Anwendungsgebiet zu verwenden, beispielsweise als Pendel- oder Langfeldleuchte.

Vorzugsweise ist der Lichtleiter einer erfindungsgemäßen Leuchte aus Pressglas hergestellt. Ein solcher Lichtleiter lässt sich besonders einfach und kostengünstig herstellen. Es sind jedoch auch andere Materialien denkbar.

Vorteilhafte Ausgestaltungen der vorliegenden Erfindung sind Gegenstand der Unteransprüche.

In einer bevorzugten Ausführungsform ist die LED am Lichteintrittsende derart angeordnet, dass zumindest ein Teil des Lichts durch die Lichteintrittsöffnung in den Reflektor gelangt. Dies ermöglicht einen besonders einfachen Aufbau der Leuchte.

In einer weiteren bevorzugten Ausführungsform ist der Lichtleitbereich im Wesentlichen scheibenförmig ausgebildet. Bei dieser Ausführungsform hat der Lichtleitbereich eine im Wesentlichen konstante Dicke und ebene Oberflächen. In einer solchen Form lässt sich Licht besonders einfach durch Totalreflexion leiten.

Es ist es jedoch auch möglich, den Lichtleitbereich gebogen auszubilden, bzw. die Form an unterschiedliche Aufgabenstellungen anzupassen.

In einer besonders bevorzugten Ausführungsform ist der scheibenförmige Lichtleitbereich zumindest abschnittsweise von der Lichtaustrittsöffnung weg, angewinkelt ausgebildet. Es gelangt ein größerer Anteil des von der LED abgestrahlten Lichts in den Lichtleiter, da der Einfallswinkel des Lichts auf den Lichtleiter reduziert ist. Außerdem kann dadurch Licht im Lichtleiter entgegen der Abstrahlrichtung der LED in einen Bereich hinter die LED geführt werden.

Vorzugsweise beträgt der Winkel zwischen dem Lichtleitbereich und der optischen Achse des Lichtleiters zwischen 80° und 90°. In diesem Bereich lassen sich der Lichtleiter bzw. die Leuchte sehr kompakt ausbilden, aber es dringt ein ausreichend großer Anteil des ausgestrahlten Lichts in den Lichtleiter ein.

Besonders vorteilhaft ist, wenn die Enden des Lichtleiters abgewinkelt sind, so dass auch sehr flach aus der LED austretendes Licht auf den Lichtleiter fällt.

In einer weiteren bevorzugten Ausführungsform umfasst der Lichtleiter einen Linsenbereich, wobei der Linsenbereich einen Teil des Lichts in den Reflektor leitet. Durch einen solchen Linsenbereich lässt sich der von der LED ausgestrahlte Lichtkegel besonders einfach in den Reflektor brechen.

Vorzugsweise weist der Lichtleiter in der Mitte den Linsenbereich auf, der von dem Lichtleitbereich umgeben ist, bzw. beidseitig in einen Lichtleitbereich übergeht. Dadurch lässt sich das Licht besonders gleichmäßig verteilen und die Leuchte einfach konstruieren.

Vorteilhafterweise ist der Linsenbereich in der Nähe der Lichteintrittsöffnung angeordnet. Dadurch lassen sich die Leuchte und der Lichtleiter besonders einfach aufbauen.

Als besonders vorteilhaft hat es sich erwiesen, wenn die LED in der Nähe der Oberfläche des Linsenbereichs angeordnet ist. Dies ermöglicht eine besonders kompakte und effiziente Bauweise. Je nach Aufgabenstellung ist es denkbar, dass der Linsenbereich als Streu- oder Sammellinse ausgebildet ist.

In einer besonders bevorzugten Ausführungsform ist der Linsenbereich zumindest teilweise in der Lichteintrittsöffnung angeordnet. Das heißt, dass zumindest ein Teil des Linsenbereichs durch die Lichteintrittsöffnung in den Reflektor ragt. Dies ermöglicht eine besonders kompakte Bauweise.

Vorteilhafterweise sind Lichteintrittsöffnung und Linsenbereich so ausgebildet, dass der Linsenbereich im Wesentlichen die gesamte Lichteintrittsöffnung ausfüllt. Dies ermöglicht eine besonders einfache Montage des Lichtleiters am Reflektor.

In einer besonders bevorzugten Ausführungsform weist der Lichtleiter zwischen dem Linsenbereich und dem Lichtleitbereich zumindest eine Stufe auf. Dabei kann die Stufe auf der der Lichtaustrittsöffnung zu- oder abgewandten Oberfläche des Lichtleiters ausgebildet sein. Es ist jedoch auch möglich, dass beide Oberflächen zumindest eine Stufe aufweisen. Dies ermöglicht eine noch kompaktere Bauweise, da der Linsenbereich weiter in den Reflektor hineinragen kann, bzw. die LED mit einem ausreichenden Abstand zur Oberfläche des Lichtleiters näher an der Lichteintrittsöffnung des Reflektors angeordnet werden kann.

Bei dieser Ausführungsform ist es denkbar, dass der Rand der Lichteintrittsöffnung derart ausgebildet ist, dass ein Kragenbereich entsteht, der sich im Wesentlichen senkrecht zur Lichteintrittsöffnung erstreckt. Dieser Kragenbereich steht mit dem stufenförmigen Bereich des Lichtleiters in Kontakt. Dies ermöglicht eine einfache Befestigung des Lichtleiters am Reflektor über Stoff- oder Kraftschlussmethoden.

Falls die Rückseite des Lichtleiters stufenförmig ausgebildet ist, wird bei dieser Ausführungsform außerdem Material eingespart und der Lichtverlust durch Absorption minimiert.

Es ist auch denkbar, die Stufe zwischen Lichtleitbereich und Linsenbereich so auszubilden, dass der gesamte Linsenbereich innerhalb des Reflektors liegt und auch die LED in der Lichteintrittsöffnung bzw. innerhalb des Reflektors angeordnet ist.

In einer weiteren bevorzugten Ausführungsform ist der Linsenbereich plankonvex ausgebildet, wobei die ebene Oberfläche des plankonvexen Linsenbereichs vom Lichtaustrittsende des Reflektors abgewandt ist. Eine solche Linse ist sehr kompakt und ermöglicht es, einen Teil des Lichts in den Reflektor zu bündeln und die Intensität des abgestrahlten Lichts zu erhöhen.

In einer weiteren bevorzugten Ausführungsform beträgt die Breite des Linsenbereichs zwischen 30 % und 50 % der Breite des Lichtleiters. In diesem Bereich ergibt sich ein besonders angenehmes Verhältnis zwischen dem über den Reflektor und dem durch den Leuchtenschirm abgegeben Anteil des Lichts.

In einer weiteren bevorzugten Ausführungsform beträgt die Breite des Lichtleiters in einer Richtung zumindest 80% der verfügbaren Breite innerhalb des Leuchtenschirms im Bereich des Lichtleiters. Dadurch wird ermöglicht, dass Licht besonders gleichmäßig durch den Leuchtenschirm abgegeben wird. Vorzugsweise beträgt die Breite des Lichtleiters zumindest 90% der verfügbaren Breite. Je näher der Lichtleiter an den Leuchtenschirm herangeführt ist, umso gleichmäßiger lässt sich der Leuchtenschirm beleuchten.

In einer weiteren bevorzugten Ausführungsform ist zumindest ein Teil der dem Lampenschirm zugewandten Oberfläche des Reflektors reflektierend ausgebildet. Das vom Lichtleitbereich in Richtung der dem Lampenschirm zugewandten Oberfläche des Reflektors abgegebene Licht wird in Richtung des Lampenschirms reflektiert. Dadurch wird mehr Licht durch den Leuchtenschirm abgegeben.

In einer weiteren bevorzugten Ausführungsform weist zumindest ein Teil der Lichtleiteroberfläche eine definierte Oberflächenstruktur auf, insbesondere eine pyramidenförmige Struktur. Dadurch lässt sich der Lichtleiter an verschiedene lichttechnische Aufgaben anpassen. Insbesondere kann zumindest ein Teil der Oberfläche des Lichtleiters, auf den Licht der LED fällt, eine solche Oberflächenstruktur aufweisen, um die Einkopplung des Lichts zu verbessern.

Es hat sich als vorteilhaft erwiesen, wenn der Lichtleiter im Linsenbereich auf derjenigen Seite, die der LED zugewandte ist, eine pyramidenförmige Struktur aufweist. Dadurch wird ein größerer Anteil des Lichtes eingekoppelt und nicht reflektiert.

In einer weiteren bevorzugten Ausführungsform ist zumindest ein Teil der Lichtleiteroberfläche mattiert, insbesondere sandgestrahlt. Bei dieser Ausführungsform ist es besonders einfach, Licht diffus abzugeben.

Es hat sich als vorteilhaft erwiesen, wenn der Lichtleitbereich zumindest teilweise mattiert ist. So wird das Licht beim Verlassen des Lichtleitbereichs besonders gut vermischt, bevor es durch den Leuchtenschirm abgegeben wird. Dadurch wird eine besonders gleichmäßige Beleuchtung der Umgebung durch den Leuchtenschirm ermöglicht.

In einer weiteren bevorzugten Ausführungsform sind Reflektor, Leuchtenschirm und Lichtleiter rotationssymmetrisch ausgebildet, und zusammen mit der LED koaxial zu der optischen Achse des Lichtleiters angeordnet. Dadurch ergeben sich eine besonders gleichmäßige Lichtverteilung und ein ästhetischer Gesamteindruck.

Vorteilhafterweise ist der Leuchtenschirm zylinderförmig ausgebildet und umgibt den gesamten Reflektor. Vorzugsweise ist dabei der Lichtleitbereich als Kegelstumpfmantel ausgebildet, in dessen Mitte sich der Linsenbereich anschließt.

In einer weiteren bevorzugten Ausführungsform ist der Reflektor als Parabolreflektor ausgebildet. Dies ermöglicht die Aussendung eines möglichst parallelen Lichtbündels, falls der Linsenbereich die LED in den Brennpunkt des Parabolreflektors abbildet.

Alternativ kann der Reflektor an die Form des Linsenbereichs angepasst ausgebildet sein, sodass ein möglichst paralleler Lichtstrahl durch die Lichtaustrittsöffnung abgegeben wird.

Es sind jedoch auch beliebige andere Reflektorformen denkbar, um die Leuchte an verschiedene lichttechnische Aufgaben anzupassen.

In einer weiteren bevorzugten Ausführungsform sind Leuchtenschirm und Reflektor am Lichtaustrittsende miteinander verbunden. Leuchtenschirm und Reflektor sind als Bauteil ausgebildet. Dies ermöglicht eine besonders einfache Montage der Leuchte.

Es hat sich als vorteilhaft erwiesen, wenn der Leuchtenschirm an seinem dem Reflektor abgewandten Ende ein Gewinde aufweist, so dass er sich an einem Gehäuse der Leuchte befestigen lässt.

Besonders vorteilhaft ist, wenn bei dieser Ausführungsform der Lichtleiter mit dem Rand der Lichteintrittsöffnung verbunden ist, so dass Lichtleiter, Reflektor und Leuchtenschirm ein Bauteil ergeben.

Ein vorteilhaftes Ausführungsbeispiel der vorliegenden Erfindung wird im Folgenden anhand von Zeichnungen näher erläutert. Es zeigen:
- Fig. 1: eine schematische Darstellung einer erfindungsgemäßen Leuchte im Querschnitt,
- Fig. 2: den Lichtleiter einer erfindungsgemäßen Leuchte im Querschnitt.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

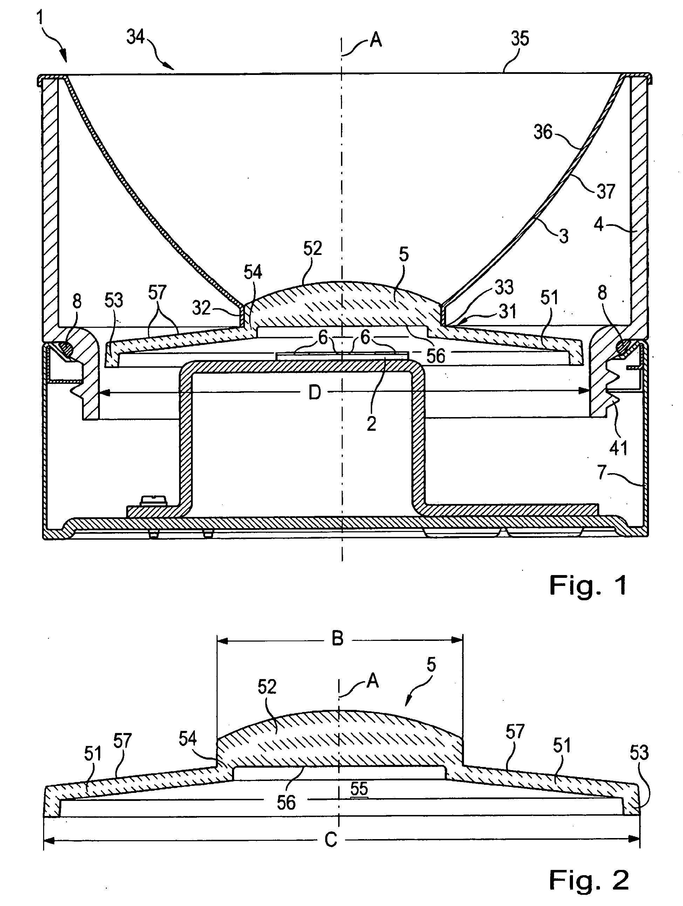

Die in Fig. 1 dargestellte erfindungsgemäße Leuchte 1 ist als Deckenstrahler bzw. Down-Light ausgebildet. Die Leuchte 1 weist eine Lichtquelle 2, einen Reflektor 3, einen Leuchtenschirm 4 sowie einen Lichtleiter 5 auf. Reflektor 3, Leuchtenschirm 4 und Lichtleiter 5 sind rotationssymmetrisch in Bezug auf die optische Achse A des Lichtleiters 5 ausgebildet sind. Bei dem dargestellten Ausführungsbeispiel besteht die Lichtquelle 2 aus mehreren LEDs 6, die konzentrisch um die Achse A angeordnet sind. Die LEDs sind als SMD-LEDs ausgebildet und am Gehäuse 7 der Leuchte 1 angebracht.

Der Reflektor 3 weist an seinem Lichteintrittsende 31 eine Lichteintrittsöffnung 32 auf. An seinem Lichtaustrittsende 34 weist der Reflektor 3 eine Lichtaustrittsöffnung 35 auf. Am Rand 33 der Lichteintrittsöffnung 32 ist ein hohlzylinderförmiger Kragenbereich ausgebildet, der sich im Wesentlichen senkrecht zur Lichteintrittsöffnung 32 in Richtung der LEDs 6 erstreckt. Der Reflektor 3 ist auf seiner Innenseite 36 und Außenseite 37 reflektierend ausgebildet.

Der Lichtleiter 5 weist einen Lichtleitbereich 51 auf. Der Lichtleitbereich 51 ist scheibenförmig ausgebildet, und ist in Bezug auf die Lichtaustrittsöffnung 35 angewinkelt. Relativ zur optischen Achse A verläuft der Lichtleitbereich 51 unter einem Winkel von etwa 84°. Der Lichtleiter 5 definiert dadurch einen Zwischenraum 55, in dem die LEDs 6 angeordnet sind. Der äußere Rand 53 des Lichtleiters 5 ist in Richtung der LEDs 6 in etwa parallel zur Achse A abgewinkelt. Durch diese Anordnung wird ein sehr großer Teil des ausgesendeten Lichts der LEDs 6 in den Lichtleiter 5 eingestrahlt. In der Mitte des Lichtleiters 5 weist dieser einen Linsenbereich 52 auf, wobei der Lichtleitbereich 51 über eine Stufe 54 in den Linsenbereich 52 übergeht. Dadurch können die LEDs 6 besonders nahe am Lichtleiter 5 angeordnet werden. Die den LEDs 6 zugewandte Oberfläche 56 des Linsenbereichs 52 weist eine pyramidenförmige Oberflächenstruktur auf, um das Einkoppeln des Lichts in den Lichtleiter zu verbessern. Der Linsenbereich 52 weist eine plankonvexe Form auf. Der Linsenbereich 5 ist in der Lichteintrittsöffnung 32 des Reflektors 3 angeordnet. Der Rand 33 der Lichteintrittsöffnung 32 steht mit dem Stufenbereich 54 des Lichtleiters 5 in Kontakt. Der Linsenbereich 52 füllt die gesamte Lichteintrittsöffnung 32 des Reflektors 3 aus. Der Lichtleiter 5 wird kraftschlüssig vom Rand 33 der Lichteintrittsöffnung 32 gehalten. Die Oberseite 57 des Lichtleitbereichs 51 ist durch Sandstrahlen mattiert. Dadurch wird das vom Lichtleitbereich 51 abgegebene Licht durchmischt.

Der Leuchtenschirm 4 ist in der dargestellten Ausführungsform opak ausgebildet und umgibt den Reflektor 3 und den Lichtleiter 5. Dadurch wird Licht durch den Leuchtenschirm 4 diffus abgegeben.

Das von den LEDs 6 ausgesendete Licht wird teilweise über die pyramidenförmige Oberflächenstruktur 56 in den Linsenbereich 52 eingekoppelt, teilweise aber auch direkt in den Lichtleitbereich 51 eingekoppelt. Ein erster Teil des eingekoppelten Lichts wird über den Linsenbereich 52 in den Reflektor 3 geleitet und von diesem nach oben abgegeben. Ein zweiter Teil wird über den Lichtleitbereich 51 radial nach außen geleitet und über die mattierte Oberfläche 57 abgegeben. Daraufhin wird dieser Teil des Lichts durch den Lampenschirm 4 diffus nach außen abgegeben. Dabei kann es auch vorher noch einmal an der Außenseite 37 des Reflektors 3 reflektiert werden.

In der dargestellten Ausführungsform beträgt die Breite B des Linsenbereichs 52 in etwa 34 % der Breite C des Lichtleiters 5. Der Leuchtenschirm 4 ist zylinderförmig ausgebildet und weist an seiner Unterseite ein Gewinde 41 auf. Die Breite C des Lichtleiters 5 beträgt mehr als 95% der verfügbaren Breite D innerhalb des Leuchtenschirms, wobei die verfügbare Breite dem Innendurchmessers D des Leuchtenschirms 4 im Bereich des Gewindes 41 entspricht. Der Reflektor 3 ist an seiner Lichtaustrittsöffnung 34 mit dem Leuchtenschirm 4 verbunden.

In der dargestellten Ausführungsform weist die Leuchte 1 ein zylinderförmiges Gehäuse 7 auf, welches mit dem Lampenschirm 4 verschraubt ist. Im Bereich der Verschraubung ist zwischen dem Gehäuse 7 und dem Leuchtenschirm 4 eine Dichtung 8 angeordnet.

Zur Montage der Leuchte 1 wird zunächst der Linsenbereich 52 des Lichtleiters 5 in die Lichteintrittsöffnung 32 des Reflektors 3 geklemmt. Daraufhin wird der Reflektor 3 an der Lichtaustrittsöffnung 35 mit dem Leuchtenschirm 4 verbunden. Zuletzt wird der Leuchtenschirm 4 mit dem Gehäuse 7 verschraubt.

Die Fig. 2 zeigt den Lichtleiter, der in der Fig. 1 dargestellten erfindungsgemäßen Leuchte im Detail.

## Patentansprüche

1. Leuchte (1), insbesondere ein Down-Light, umfassend eine Lichtquelle (2) und einen Reflektor (3), wobei der Reflektor (3) ein Lichteintrittsende (31) und ein Lichtaustrittsende (34) aufweist, wobei das Lichteintrittsende (31) zumindest eine Lichteintrittsöffnung (32) mit einem Rand (33) umfasst und das Lichtaustrittsende (34) eine Lichtaustrittsöffnung (35) umfasst, wobei die Leuchte (1) des Weiteren einen Leuchtenschirm (4) umfasst, der den Reflektor (3) zumindest teilweise umgibt, wobei ein erster Teil des Lichts der Lichtquelle (2) nicht durch den Leuchtenschirm (4), sondern vom Reflektor (3) durch die Lichtaustrittsöffnung (35) abgegeben wird, und ein zweiter Teil des Lichts der Lichtquelle (2) durch den Leuchtenschirm (4) abgegeben wird,
**dadurch gekennzeichnet, dass**
die Lichtquelle (2) eine LED (6) ist, wobei die Leuchte (1) des Weiteren einen Lichtleiter (5) umfasst, der im Bereich der Lichteintrittsöffnung (32) zwischen der LED (6) und dem Lichtaustrittsende (34) derart angeordnet ist, dass zumindest ein Teil des Lichts der LED (6) in den Lichtleiter (5) eindringt, wobei der Lichtleiter (5) einen Lichtleitbereich (51) umfasst, der sich in einer Richtung senkrecht zur Längserstreckung des Reflektors (3) zumindest teilweise über den Rand (33) der Lichteintrittsöffnung (32) hinaus erstreckt.

2. Leuchte (1) nach Anspruch 1, **dadurch gekennzeichnet, dass** der Lichtleitbereich (51) im Wesentlichen scheibenförmig ausgebildet ist.

3. Leuchte (1) nach Anspruch 2, **dadurch gekennzeichnet, dass** der Lichtleitbereich (51) zumindest abschnittsweise von der Lichtaustrittsöffnung (35) weg, angewinkelt ausgebildet ist.

4. Leuchte (1) einem der Ansprüche 1 bis 3, **dadurch gekennzeichnet, dass** der Lichtleiter (5) einen Linsenbereich (52) umfasst, wobei der Linsenbereich (52) einen Teil des Lichts in den Reflektor (3) leitet.

5. Leuchte (1) nach Anspruch 4, **dadurch gekennzeichnet, dass** der Linsenbereich (52) zumindest teilweise in der Lichteintrittsöffnung (32) angeordnet ist.

6. Leuchte (1) nach Anspruch 4 oder 5, **dadurch gekennzeichnet, dass** der Lichtleiter (5) zwischen dem Linsenbereich (52) und dem Lichtleitbereich (51) zumindest eine Stufe (54) aufweist.

7. Leuchte (1) nach einem der Ansprüche 4 bis 6, **dadurch gekennzeichnet, dass** der Linsenbereich (52) plankonvex ausgebildet ist, wobei die ebene Oberfläche des plankonvexen Linsenbereichs (52) vom Lichtaustrittsende (34) des Reflektors (3) abgewandt ist.

8. Leuchte (1) nach einem der Ansprüche 4 bis 7, **dadurch gekennzeichnet, dass** die Breite (B) des Linsenbereichs (52) zwischen 30% und 50% der Breite (C) des Lichtleiters (5) beträgt.

9. Leuchte (1) nach einem der Ansprüche 1 bis 8, **dadurch gekennzeichnet, dass** die Breite (C) des Lichtleiters (5) in einer Richtung zumindest 80% der verfügbaren Breite (D) innerhalb des Leuchtenschirms (4) im Bereich des Lichtleiters (5) beträgt.

10. Leuchte (1) nach einem der Ansprüche 1 bis 9, **dadurch gekennzeichnet, dass** zumindest ein Teil der dem Lampenschirm (4) zugewandten Oberfläche (37) des Reflektors (3) reflektierend ausgebildet ist.

11. Leuchte (1) nach einem der Ansprüche 1 bis 10, **dadurch gekennzeichnet, dass** zumindest ein Teil der Lichtleiteroberfläche eine definierte Oberflächenstruktur, insbesondere eine pyramidenförmige Struktur aufweist.

12. Leuchte (1) nach einem der Ansprüche 1 bis 11, **dadurch gekennzeichnet, dass** zumindest ein Teil der Lichtleiteroberfläche mattiert, insbesondere sandgestrahlt ist.

13. Leuchte (1) nach einem der Ansprüche 1 bis 12, **dadurch gekennzeichnet, dass** Reflektor (3), Leuchtenschirm (4) und Lichtleiter (5) rotationssymmetrisch ausgebildet sind und zusammen mit der LED (6) koaxial zu der optischen Achse (A) des Lichtleiters (5) angeordnet sind.

14. Leuchte (1) nach einem der Ansprüche 1 bis 13, **dadurch gekennzeichnet, dass** der Reflektor (3) als Parabolreflektor ausgebildet ist.

15. Leuchte (1) nach einem der Ansprüche 1 bis 14, **dadurch gekennzeichnet, dass** Lampenschirm (4) und Reflektor (3) am Lichtaustrittsende (34) miteinander verbunden sind.

## Claims

1. Luminaire (1), in particular a downlight, comprising a light source (2) and a reflector (3), the reflector (3) comprising a light entrance end (31) and a light exit end (34), the light entrance end (31) comprising at least one light entrance opening (32) having a rim (33), and the light exit end (34) comprising a light exit opening (35), the luminaire (1) further comprising a luminaire shade (4) which surrounds the reflector (3) at least in part, a first portion of the light from the light source (2) not being emitted through the luminaire shade (4), but rather being omitted through the light exit opening (35) by means of the reflector (3), and a second portion of the light from the light source (2) being emitted through the luminaire shade (4),
**characterised in that**
the light source (2) is an LED (6), the luminaire (1) further comprising a light guide (5) that is arranged in the region of the light entrance opening (32) between the LED (6) and the light exit end (34) such that at least a portion of the light from the LED (6) enters the light guide (5), the light guide (5) comprising a light-guiding region (51) which extends beyond the rim (33) of the light entrance opening (32), at least in part, in a direction perpendicular to the longitudinal extension of the reflector (3).

2. Luminaire (1) according to claim 1, **characterised in that** the light-guiding region (51) is substantially disc-shaped.

3. Luminaire (1) according to claim 2, **characterised in that** the light-guiding region (51) is angled away from the light exit opening (35), at least in portions.

4. Luminaire (1) according to any of claims 1 to 3, **characterised in that** the light guide (5) comprises a lens region (52), the lens region (52) guiding a portion of the light into the reflector (3).

5. Luminaire (1) according to claim 4, **characterised in that** the lens region (52) is arranged in the light entrance opening (32) at least in part.

6. Luminaire (1) according to either claim 4 or claim 5, **characterised in that** the light guide (5) comprises at least one step (54) between the lens region (52) and the light-guiding region (51).

7. Luminaire (1) according to any of claims 4 to 6, **characterised in that** the lens region (52) is piano-convex, the planar surface of the plano-convex lens region (52) facing away from the light exit end (34) of the reflector (3).

8. Luminaire (1) according to any of claims 4 to 7, **characterised in that** the width (B) of the lens region (52) is between 30 % and 50 % of the width (C) of the light guide (5).

9. Luminaire (1) according to any of claims 1 to 8, **characterised in that** the width (C) of the light guide (5) in one direction is at least 80 % of the available width (D) inside the luminaire shade (4) in the region of the light guide (5).

10. Luminaire (1) according to any of claims 1 to 9, **characterised in that** at least a part of the surface (37) of the reflector (3) facing the luminaire shade (4) is reflective.

11. Luminaire (1) according to any of claims 1 to 10, **characterised in that** at least a part of the light guide surface has a defined surface structure, in particular a pyramidal structure.

12. Luminaire (1) according to any of claims 1 to 10, **characterised in that** at least a part of the light guide surface is frosted, in particular sandblasted.

13. Luminaire (1) according to any of claims 1 to 12, **characterised in that** the reflector (3), the luminaire shade (4) and the light guide (5) are rotationally symmetrical and are arranged, together with the LED (6), coaxially with the optical axis (A) of the light guide (5).

14. Luminaire (1) according to any of claims 1 to 13, **characterised in that** the reflector (3) is formed as a parabolic reflector.

15. Luminaire (1) according to any of claims 1 to 14, **characterised in that** the lampshade (4) and the reflector (3) are interconnected at the light exit end (34).

## Revendications

1. Luminaire (1), notamment plafonnier ou spot de plafond, comprenant une source de lumière (2) et un réflecteur (3), luminaire dans lequel le réflecteur (3) présente une extrémité d'entrée de lumière (31) et une extrémité de sortie de lumière (34), l'extrémité d'entrée de lumière (31) comportant au moins une ouverture d'entrée de lumière (32) avec un bord (33), et l'extrémité de sortie de lumière (34) comportant une ouverture de sortie de lumière (35), le luminaire (1) comprenant par ailleurs un abat-jour ou diffuseur (4), qui entoure le réflecteur (3) au moins partiellement, une première partie de la lumière de la source de lumière (2) n'étant pas délivrée par l'abat-jour ou diffuseur (4), mais par le réflecteur (3) au travers de l'ouverture de sortie de lumière (35), et une deuxième partie de la lumière de la source de lumière (2) étant délivrée par l'abat-jour ou diffuseur (4),
**caractérisé en ce que**
la source de lumière (2) est une diode électroluminescente ou LED (6), le luminaire (1) comportant par ailleurs un guide d'onde lumineuse (5), qui est agencé dans la zone de l'ouverture d'entrée de lumière (32) entre la LED (6) et l'ouverture de sortie de lumière (34), de façon telle qu'au moins une partie de la lumière provenant de la LED (6) pénètre dans le guide d'onde lumineuse (5), le guide d'onde lumineuse (5) comprenant une zone de guide de lumière (51), qui s'étend, dans une direction perpendiculaire à l'étendue longitudinale du réflecteur (3), au moins partiellement au-delà du bord (33) de l'ouverture d'entrée de lumière (32).

2. Luminaire (1) selon la revendication 1, **caractérisé en ce que** la zone de guide de lumière (51) est essentiellement d'une configuration en forme de disque.

3. Luminaire (1) selon la revendication 2, **caractérisé en ce que** la zone de guide de lumière (51) est, au moins par endroits, coudée de manière à s'éloigner de l'ouverture de sortie de lumière (35).

4. Luminaire (1) selon l'une des revendications 1 à 3, **caractérisé en ce que** le guide d'onde lumineuse (5) comprend une zone de lentille (52), la zone de lentille (52) dirigeant une partie de la lumière dans le réflecteur (3).

5. Luminaire (1) selon la revendication 4, **caractérisé en ce que** la zone de lentille (52) est agencée au moins partiellement dans l'ouverture d'entrée de lumière (32).

6. Luminaire (1) selon la revendication 4 ou la revendication 5, **caractérisé en ce que** le guide d'onde lumineuse (5) présente au moins un gradin (54) entre la zone de lentille (52) et la zone de guide de lumière (51).

7. Luminaire (1) selon l'une des revendications 4 à 6, **caractérisé en ce que** la zone de lentille (52) est d'une configuration plan-convexe, la surface plane de la zone de lentille (52) plan-convexe, étant dirigée à l'opposé de l'extrémité de sortie de lumière (34) du réflecteur (3).

8. Luminaire (1) selon l'une des revendications 4 à 7, **caractérisé en ce que** la largeur (B) de la zone de lentille (52) vaut entre 30% et 50% de la largeur (C) du guide d'onde lumineuse (5).

9. Luminaire (1) selon l'une des revendications 1 à 8, **caractérisé en ce que** la largeur (C) du guide d'onde lumineuse (5) vaut, dans une direction, au moins 80% de la largeur (D) disponible à l'intérieur de l'abat-jour ou diffuseur (4) dans la zone du guide d'onde lumineuse (5).

10. Luminaire (1) selon l'une des revendications 1 à 9, **caractérisé en ce qu'**au moins une partie de la surface (37) du réflecteur (3), qui est dirigée vers l'abat-jour ou diffuseur (4), est d'une configuration réfléchissante.

11. Luminaire (1) selon l'une des revendications 1 à 10, **caractérisé en ce qu'**au moins une partie de la surface du guide d'onde lumineuse présente une structure de surface définie, notamment une structure à pyramides.

12. Luminaire (1) selon l'une des revendications 1 à 11, **caractérisé en ce qu'**au moins une partie de la surface du guide d'onde lumineuse est dépolie, et est notamment sablée.

13. Luminaire (1) selon l'une des revendications 1 à 12, **caractérisé en ce que** le réflecteur (3), l'abat-jour ou diffuseur (4) et le guide d'onde lumineuse (5) sont d'une configuration à symétrie de rotation, et sont agencés en commun avec la LED (6) coaxialement à l'axe optique (A) du guide d'onde lumineuse (5).

14. Luminaire (1) selon l'une des revendications 1 à 13, **caractérisé en ce que** le réflecteur (3) est réalisé sous forme de réflecteur parabolique.

15. Luminaire (1) selon l'une des revendications 1 à 14, **caractérisé en ce que** l'abat-jour ou diffuseur (4) et le réflecteur (3) sont reliés mutuellement au niveau de l'extrémité de sortie de lumière (34)
